# EUROPÄISCHE PATENTSCHRIFT

(11) **EP 0 280 895 B1**
(45) Veröffentlichungstag und Bekanntmachung des Hinweises auf die Patenterteilung: **27.01.1993**
(21) Anmeldenummer: 88101497.1
(22) Anmeldetag: 02.02.1988
(51) Int. Cl.: H04Q 11/04

(54) **Digitale Schnittstelle zwischen wenigstens zwei Teilnehmeranschlussschaltungseinheiten und einer Verarbeitungseinheit**
Digital interface between at least two subscriber terminal units and a processing unit
Interface numérique entre au moins deux équipements terminaux d'abonnés et une unité de traitement

(30) Priorität: 12.02.1987 DE 3704409
(43) Veröffentlichungstag der Anmeldung: 07.09.1988
(73) Patentinhaber: SIEMENS AKTIENGESELLSCHAFT, 80333 München (DE); THE PLESSEY COMPANY plc, Ilford Essex, IG1 4AQ (GB); COMPAGNIE INDUSTRIELLE DES TELECOMMUNICATIONS CIT-ALCATEL S.A. dite:, F-75725 ParisCédex (FR); ITALTEL SOCIETA ITALIANA TELECOMUNICAZIONI s.p.a., 20149 Milano (IT)
(72) Erfinder: Lechner, Robert, Dipl.-Ing., A-3100 Sankt Pölten (AT); Rudolf, Hans-Werner, Dr. rer. nat., D-8000 München 80 (DE); Stader, Harald, Dipl.-Ing., D-8000 München 71 (DE); Wingerath, Norbert, Dipl.-Ing., D-8000 München 70 (DE); Priest, Christopher Charles Andrew, Taplow,Maidenhead, SL6 0HQ (GB); Dyer, Nigel Patrick, Chiswick London W 4 (GB); Galpin, Robert Keith Portway, Buchs SL7 1EH (GB); Manca, Marcello, I-20124 Milano (IT); Mosca, Virgilio, I-20122 Milano (IT); Nicastro, Antonio, I-20010 Cormaredo - Milano (IT); Albouy, Pierre, F-22300 Lannion (FR); Le Gougnec, Robert, F-22304 Lannion Cedex (FR); Nadaradjane, Ramatchandirane, F-22700 Perros-Guirec (FR)
(74) Vertreter: Fuchs, Franz-Josef, Dr.-Ing.

(56) Entgegenhaltungen:
- TELCOM REPORT, Band 9, Nr. 2, März/April 1986, Seiten 156-160, Berlin, DE; B. MÜLLER et al.: "Hochintegrierte ISDN-Bausteine in IOM-Architektur"
- INTERNATIONAL CONFERENCE ON THE ISDN AND ITS IMPACT ON INFORMATION TECHNOLOGY, 14.-16. Januar 1985, Seiten 103-109, London, GB; G. GEIGER et al.: "VLSI chip set spurs ISDN system innovation"
- ELEKTRONIK, Band 34, Nr. 3, 8. Februar 1985, Seiten 45-50, München, DE; L. LERACH et al.: ""Peripheral board controller" für digitale Vermittlungssysteme"
- ELECTRONIC DESIGN, Band 34, Nr. 2, 23. Januar 1986, Seiten 115-120, Hasbrouck Heights, New Jersey, US; L. LERACH et al.: "Digital duo boosts flexibility and function of telephone lines"
- INTERNATIONAL SWITCHING SYMPOSIUM 1987, Phoenix, Arizona, 15.-20. März 1987, Seiten 577-581, IEEE, US; K. GALPIN et al.: "Progress in analogue line card LSI circuits in Europe"

## Beschreibung

Die Erfindung betrifft eine digitale Schnittstelle zwischen wenigstens zwei Teilnehmeranschlußschaltungseinheiten für den Anschluß von analogen Teilnehmeranschlußleitungen eines digitalen Zeitmultiplex-Fernmeldenetzes und einer die Codierung bzw. Decodierung und Filterung der über die Teilnehmeranschlußleitungen übertragenen Fernsprechinformationen unter dem Steuereinfluß eines eigenen Prozessors bewirkenden Verarbeitungseinheit, die auch die Einstellbefehle zur Einstellung verschiedener Betriebszustände den Teilnehmeranschlußschaltungseinheiten und zur Festlegung der Art der in den Teilnehmeranschlußschaltungseinheiten vorgenommenen Teilnehmeranschlußleitungsindikationen abgibt.

Mit Hilfe der integrierten Schaltkreistechnik gelingt es zwar, den Platzbedarf für relativ komplexe Baueinheiten immer weiter zu verringern. Eine Grenze wird dabei am ehesten durch die Anzahl der erforderlichen Anschlußstifte an eine solche Baueinheit vorgegeben, die insbesondere im Hinblick auf eine Herstellung von Anschlußverbindungen, z.B. durch Löten, nicht beliebig nahe benachbart zueinander angeordnet sein dürfen.

Bisher sind daher zwischen integrierten Teilnehmeranschlußschaltungseinheiten und einer Verarbeitungseinheit der obengenannten Art serielle Schnittstellen vorgesehen worden, bei denen einzelne Anschlüsse nacheinander von verschiedenartigen Signalen beaufschlagt bzw. zur Abgabe verschiedenartiger Signale ausgenutzt werden, so daß die Anzahl der insgesamt erforderlichen Anschlüsse verhältnismäßig klein im Vergleich zu der Anzahl der verschiedenartigen aufzunehmenden oder abzugebenden Signale ist. Dafür müssen aber längere Zeiten für die Abwicklung der Signalübergabe in Kauf genommen werden. Hinzu kommt ein erhöhter Leitungsaufwand für die Abwicklung der Steuerung einer solchen seriellen Schnittstelle (siehe z.B. "Elektronik, Band 34, Nr. 8, 08.02.1985, Seiten 45 bis 50, München, DE; L. Lerach et al.: "Peripheral board controller" für digitale Vermittlungsysteme und "Electronic Design" Band 34, Nr. 2, 23.01.1986, Seiten 115 bis 120, Hasbrouck, Heights, New Jersey, US; L. Lerach et al: "Digital duo boosts flexibility and function of telephone lines"

Aus "Electronics", Band 58, Nr. 24, 17.Juni 1985, Seiten 54 bis 57, New York, US, "SLIC chip shrinks phone-line interfaces" ist eine Anordnung beschrieben, bei der eine Verarbeitungseinheit mit einer einzigen Teilnehmeranschlußeinheit zusammenarbeitet. Im Zusammenhang mit einer Parallelschnittstelle für die Übertragung von Steuerinformationen von der Verarbeitungseinheit an die Teilnehmeranschlußeinheit weist die Verarbeitungseinheit ein Ausgaberegister auf.

In der Praxis sind zwei Typen von Teilnehmeranschlußschaltungseinheiten von Interesse. Ein sogenannter ER-SLIC (External Ringing-Subscriber Line Interface Circuit) dessen im Hinblick auf den Unterschied zur anderen Typ wesentliches Merkmal darin besteht, daß die Rufstromimpulse außerhalb der Baueinheit erzeugt werden und zu ihrer Einspeisung und Steuerung ein Relais eingesetzt wird. Bei der anderen Art von Teilnehmeranschlußschaltungseinheit, dem sogenannten IR-SLIC (Internal Ringing-Subscriber Line Interface Circuit) werden Rufstrom- und Zählimpulse intern von der Speisespannung abgeleitet. Bei einer vorgeschlagenen Lösung für einen solchen IR-SLIC ist ein Ein-/ Ausgaberegister vorgesehen.

Aufgabe der Erfindung besteht nun darin, eine digitale Schnittstelle der obengenannten Art so auszugestalten, daß sie einerseits eine wahlweise einsetzbare Schnittstelle für den Anschluß von beiden Arten von Teilnehmeranschlußschaltungseinheiten darstellt, andererseits mit einer relativ geringen Anzahl von Anschlußstiften auskommt, ohne daß die erwähnten Nachteile der seriellen Schnittstelle in Kauf genommen werden müssen.

Erfindungsgemäß wird diese Aufgabe dadurch gelöst, daß diese Schnittstelle als Parallelschnittstelle realisiert ist, daß hierzu als Bestandteil der Verarbeitungseinheit eine Anzahl von Anschlüssen vorgesehen ist, denen jeweils eine Stufe eines Ein-/ Ausgaberegisters, in denen ein- bzw. auszugebende Informationen jeweils bis zum Auftreten eines Schreib- bzw. Lesebefehls zwischengespeichert werden, sowie jeweils eine Stufe eines Einstellregisters zugeordnet ist, daß diese Anschlüsse jeweils wahlweise als Signaleingang oder als Signalausgang wirksamgeschaltet sind, je nachdem in welchen von zwei möglichen Schaltzuständen die betreffende Stufe des Einstellregisters gebracht ist, daß diese Anschlüsse ferner in einer ersten Betriebsart, in der Teilnehmeranschlußschaltungseinheiten angeschlossen sind, bei denen ebenfalls einem Teil der Anschlüsse jeweils die Stufe eines Ein-/Ausgaberegisters zugeordnet ist, und in einer zweiten Betriebsart betreibbar sind, in der Teilnehmeranschlußschaltungseinheiten angeschlossen sind, bei denen ein solches Ein-/Ausgaberegister fehlt, wobei bei Vorliegen der ersten Betriebsart bei der Verarbeitungseinheit n Anschlüsse, die jeweils mit dem Anschluß einer anderen von n Teilnehmeranschlußschaltungseinheiten verbunden sind, wahlweise als Ausgang wirksamgeschaltet sind, in welchem Falle sie ein die betreffende Teilnehmeranschlußschaltungseinheit in Betriebsbereitschaft versetzendes Signal abgeben, und als Eingang wirksamgeschaltet sind, in welchem Falle sie von der betreffenden Teilnehmeranschlußschaltungseinheit abgegebene Daten aufnehmen, die übrigen mit Teilnehmeranschlußschaltungseinheiten verbundenen Anschlüsse dagegen nur als Ausgänge wirksamgeschaltet sind, von denen mindestens eine Gruppe zur Abgabe von Einstellbefehlen an die Teilnehmeranschlußschaltungseinheiten dient, sowie bei den Teilnehmeranschlußschaltungseinheiten jeweils ein Anschluß als Eingang wirksamgeschaltet ist, der das von der Verarbeitungseinheit gelieferte Betriebsbereitschaftssignal aufnimmt, oder als Ausgang wirksamgeschaltet ist, über den entsprechend den an die übrigen nur als Eingänge wirksamgeschalteten Anschlüssen von der Verarbeitungseinheit abgegebenen Einstellbefehlen die den Ergebnissen von in der Teilnehmeranschlußschaltungseinheit vorgenommenen Teilnehmeranschlußleitungsindikationen entsprechende Signale abgeben werden, und wobei bei Vorliegen der zweiten Betriebsart bei der Verarbeitungseinheit sämtliche Anschlüsse in n Gruppen als Ausgänge wirksamgeschaltet sind, über die Einstellbefehle für n angeschlossene Teilnehmeranschlußschaltungseinheiten abgegeben werden, sowie bei den angeschlossenen Teilnehmeranschlußschaltungseinheiten eine entsprechende Anzahl von mit dieses Ausgängen verbundenen Anschlüssen sowie ein weiterer Anschluß zur Aufnahme eines in dieser Betriebsart nicht von der Verarbeitungseinheit gelieferten Betriebsbereitschaftssignals nur als Eingänge und ein Anschluß nur als Ausgang zur Abgabe nicht an die Verarbeitungseinheit gerichteter den Ergebnissen der genannten Teilnehmeranschlußleitungsindikationen entsprechenden Signalen wirksamgeschaltet sind.

Nachstehend wird die Erfindung anhand eines Ausführungsbeispiels unter Bezugnahme auf eine Zeichnung näher erläutert.

In der Zeichnung zeigen:
- FIG. 1: Ein Blockschaltbild, das die Anschlußkonfiguration zeigt, in der Teilnehmeranschlußschaltungseinheiten und eine Verarbeitungseinheit, deren gemeinsame Schnittstelle die Erfindung betrifft, eingesetzt sind.
- FIG. 2: Ein Blockschaltbild der Verarbeitungseinheit mit dem sie betreffenden Teil der erfindungsgemäßen Schnittstelle.
- FIG. 3: Ein Blockschaltbild der Zusammenschaltung von Verarbeitungseinheit und IR-SLIC's.
- FIG. 4: Ein Blockbild der Zusammenschaltung von Verarbeitungseinheit und ER-SLIC's.

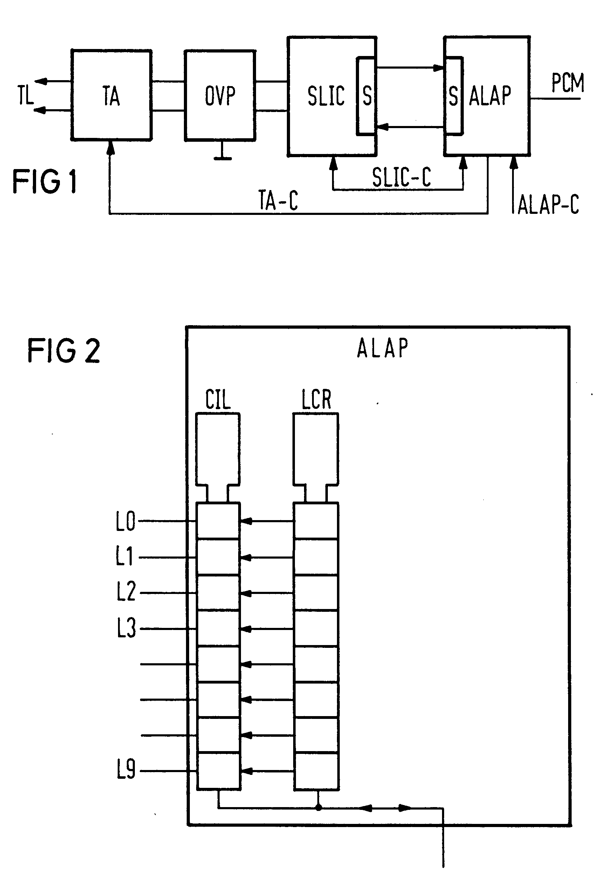

Die FIG. 1 zeigt die wesentlichen im Zusammenhang mit dem Anschluß einer analogen Teilnehmeranschlußleitung TL an die Vermittlungsstelle eines Zeitmultiplex-Fernmeldesystems erforderlichen Teile.

Hierzu gehört eine Teilnehmeranschlußlschaltungseinheit SLIC, die eine integrierte Schaltungseinheit ist und die in erster Linie für die Speisung der Teilnehmeranschlußleitung TL, die Rufstromeinspeisung, die Zahlimpulseinspeisung, die Leitungszustandsindikation und die Bestimmung der übertragungstechnischen Eigenschaften verantwortlich ist. Diese Teilnehmeranschlußlschaltungseinheit SLIC arbeitet mit einer Verarbeitungseinheit ALAP zusammen, in der die Codier- und Decodierfunktionen sowie die Filterfunktionen im Zusammenhang mit den auf der Teilnehmeranschlußleitung übertragenen analogen Signalen realisiert werden. Die Verarbeitungseinheit ALAP bedient in der Praxis vorzugsweise zwei Teilnehmeranschlußleitungen TL. Sie steht unter dem Steuereinfluß eines hier nicht dargestellten Mikroprozessors.

Die Erfindung betrifft nun die Schnittstelle zwischen der Verarbeitungseinheit ALAP und Teilnehmeranschlußschaltungseinheiten SLIC, vorzugsweise zwei solcher Einheiten.

In der FIG. 2 ist eine Verarbeitungseinheit ALAP im Hinblick auf auf den sie betreffenden Teil der Schnittstelle mehr ins einzelne gehend dargestellt. Die Verarbeitungseinheit weist eine Anzahl von Anschlüssen, im dargestellten Fall 10 Anschlüsse L0 bis L9 auf, denen jeweils eine Stufe eines Ein-/Ausgaberegisters CIL zugeordnet ist. In diesem Register werden ein- bzw. auszugebende Informationen jeweils bis zum Auftreten eines Schreib- bzw. Lesebefehls zwischengespeichert. Jedem der Anschlüsse L0 bis L9 ist ferner jeweils eine Stufe eines Einstellregisters LCR zugeordnet.

Die Anschlüsse L0 bis L9 können jeweils wahlweise als Signaleingang oder als Signalausgang wirksamgeschaltet sein. Welcher der beiden Zustände wirksam ist, hängt jeweils davon ab, in welchen der zwei möglichen Schaltzustände die zugehörige Stufe des Einstellregisters LCR gebracht ist.

Die Anschlüsse der Verarbeitungseinheit können, wie angedeutet, in einer ersten und in einer zweiten Betriebsart betrieben werden.

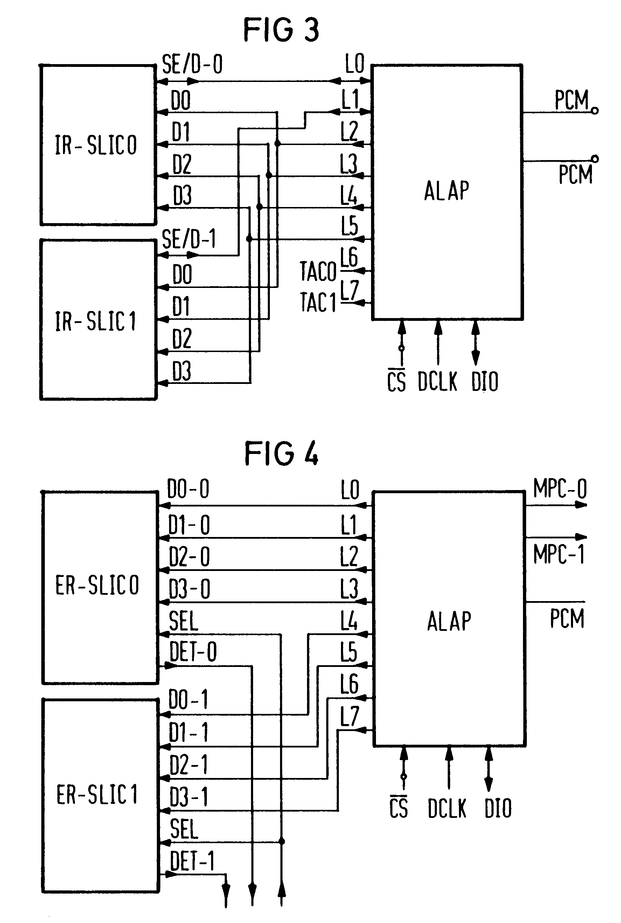

Die FIG. 3 zeigt nun die Konstellation, die im Falle der ersten Betriebsart vorliegt. Es sind dabei an die Verarbeitungseinheit ALAP Teilnehmeranschlußschaltungseinheiten IR-SLIC 0 und IR-SLIC 1 angeschlossen, bei denen ebenfalls einem Teil der Anschlüsse jeweils die Stufe eines (hier nicht dargestellten) Ein-/Ausgaberegisters zugeordnet ist. Wie ebenfalls schon angedeutet, handelt es sich bei den Teilnehmeranschlußschaltungseinheiten um solche, bei denen die Zählimpuls- und Rufstromerzeugung intern erfolgt.

Bei der Verarbeitungseinheit ALAP sind in der ersten Betriebsart so viele Anschlüsse wie Teilnehmeranschlußschaltungseinheiten vorhanden sind, wahlweise als Ausgang und als Eingang wirksamgeschaltet. Im vorliegenden Falle sind dies zwei Anschlüsse, nämlich der Anschluß L0, der mit einem Anschluß SE/D-0 der ersten Teilnehmeranschlußschaltungseinheit IR/SLIC 0 verbunden ist, sowie der Anschluß L1, der mit dem Anschluß SE/D-1 der Teilnehmeranschlußschaltungseinheit IR-SLIC 1 in Verbindung steht. Die Anschlüsse SE/D-0 und SE/D-1 der Teilnehmeranschlußschaltungseinheiten sind ebenfalls wahlweise als Eingang und als Ausgang wirksamgeschaltet und zwar gerade im umgekehrten Verhältnis wie bei den Anschlüssen der Verarbeitungseinheit, mit denen sie in Verbindung stehen. Bei der Verarbeitungseinheit ALAP sind ferner ein zum nicht dargestellten mikroprozessor führenden Daten-Eingang/Ausgang DIO, ein Datenschiebetakteingang C̅S̅, PCM-Eingänge/Ausgänge PCM, sowie Zählimpulsausgänge MPC-0, MPC-1 zu erwähnen.

Im Falle der Wirksamschaltung der Anschlüsse L0 und L1 als Ausgang gibt die Verarbeitungseinheit über diese Anschlüsse an die betreffende Teilnehmeranschlußschaltungseinheit ein Signal ab, das von dem betreffenden und dabei als Eingang wirksamgeschalteten Anschluß SE/D-0 bzw. SE/D-1 aufgenommen wird, und dazu dient, die Teilnehmeranschlußschaltungseinheit in Betriebsbereitschaft zu versetzen.

Wenn die Anschlüsse L0 oder L1 der Verarbeitungseinheit als Eingang wirksam geschaltet sind, nehmen sie von der betreffenden Teilnehmeranschlußschaltungseinheit über deren dann als Ausgang wirksamgeschalteten Anschluß SE/D-0 bzw. SE/D-1 abgegebene Daten auf, bei denen es sich um die Ergebnisse innerhalb der Teilnehmeranschlußschaltungseinheit vorgenommenen Teilnehmerleitungszustandsindikationen handelt.

Die Anschlüsse L2 bis L5 der Verarbeitungseinheit ALAP sind lediglich als Ausgänge wirksamgeschaltet und jeweils sowohl mit einem der Anschlüsse D0 bis D3 der Teilnehmeranschlußschaltungseinheit IR/SLIC 0 als auch der Teilnehmeranschlußschaltungseinheit IR/SLIC 1 verbunden. Die letztgenannten Anschlüsse der Teilnehmeranschlußschaltungseinheiten sind dabei als Eingänge wirksamgeschaltet.

Die Anschlüsse L2 bis L5 bzw. die Anschlüsse D0 bis D3 dienen der Abgabe bzw. der Aufnahme von Einstellbefehlen zur Einstellung entweder verschiedener Betriebszustände und Speisezustände der Teilnehmeranschlußschaltungseinheiten, oder aber der Bestimmung welches der Teilnehmerleitungsindikationsergebnisse abgefragt werden soll, wobei in den letztgenannten Fällen, wie dargelegt, die Anschlüsse SE/D-0 und SE/D-1 der Teilnehmeranschlußschaltungseinheiten als Ausgang und die Anschlüsse L0 und L1 der Verarbeitungseinheit als Eingänge wirksamgeschaltet sind.

Zwei weitere Anschlüsse L6 und L7 der Verarbeitungseinheit ALAP können als Ausgänge wirksamgeschaltet sein, die nicht mit Anschlüssen von Teilnehmeranschlußschaltungseinheiten verbunden sind und zur Abgabe von Signalen dienen, die im Zusammenhang mit Prüfungen der Teilnehmeranschlußleitungen und der Teilnehmeranschlußschaltungseinheiten stehen, die von einer gesonderten hier nicht dargestellten Prüfbaueinheit durchgeführt werden.

Die zweite Betriebsart, in der die Anschlüsse der Verarbeitungseinheit betrieben werden können, ist in FIG. 4 veranschaulicht. Es sind dabei Teilnehmeranschlußschaltungsbaueinheiten ER/SLIC 0 und ER/SLIC 1 angeschlossen, für deren Anschlüsse kein Ein-/ Ausgaberegister vorgesehen ist. Es handelt sich bei diesen Teilnehmeranschlußschaltungseinheiten, wie dargelegt um solche, bei denen die Rufstromimpulse außerhalb der Baueinheit erzeugt und über ein Rufstromrelais angeschaltet werden. In dieser Betriebsart sind sämtliche der Anschlüsse der Verarbeitungseinheit ALAP, die mit Anschlüssen der Teilnehmeranschlußschaltungseinheiten in Verbindung stehen, hier also die Anschlüsse L0 bis L7, als Ausgänge wirksamgeschaltet. Eine erste Gruppe dieser Anschlüsse, nämlich die Anschlüsse L0 bis L3 sind dabei mit jeweils einem anderen der Anschlüsse D0-0 bis D3-0 der Teilnehmeranschlußschaltungseinheit ER/SLIC 0 verbunden, eine zweite Gruppe der Anschlüsse der Verarbeitungseinheit, nämlich die Anschlüsse L4 bis L7 sind mit jeweils einem anderen Anschluß D0-1 bis D3-1 der Teilnehmeranschlußschaltungseinheit ER/SLIC 1 verbunden. Die letztgenannten Anschlüsse der Teilnehmeranschlußschaltungseinheiten sind lediglich als Eingang wirksamgeschaltet.

Ein weiterer als Eingang wirksamgeschalteter Anschluß SEL der Teilnehmeranschlußschaltungseinheiten ER/SLIC 0 und ER/SLIC 1 dient der Aufnahme von Signalen zur Herstellung der Betriebsbereitschaft dieser Baueinheiten, die hier jedoch nicht von der Verarbeitungseinheit ALAP kommen.

Die Anschlüsse L0 bis L7 der Verarbeitungseinheit dienen auch hier der Abgabe von Einstellinbefehl von zur Einstellung von Betriebs- und Speisezuständen bei den Teilnehmeranschlußschaltungseinheiten bzw. zur Abfrage der einzelnen Teilnehmerleitungsindikationsergebnisse, die von den als Ausgängen wirksamgeschalteten DET-0 und DET-1 der Teilnehmeranschlußschaltungseinheiten abgegeben werden, hier jedoch nicht wie in der ersten Betriebsart an die Verarbeitungseinheit gelangen.

Die Anschlüsse L8 und L9 stehen für andere Zwecke zur Verfügung.

## Patentansprüche

1. Digitale Schnittstelle zwischen wenigstens zwei Teilnehmeranschlußschaltungseinheiten (JR-SLIC; ER-SLIC) für den Anschluß von analogen Teilnehmeranschlußleitungen (TL) eines digitalen Zeitmultiplex-Fernmeldenetzes und einer die Codierung bzw. Decodierung und Filterung der über die Teilnehmeranschlußleitungen übertragenen Fernsprechinformationen unter dem Steuereinfluß eines eigenen Prozessors bewirkenden Verarbeitungseinheit, (ALAP) die auch die Einstellbefehle zur Einstellung verschiedener Betriebszustände der Teilnehmeranschlußschaltungseinheiten und zur Festlegung der Art der in den Teilnehmeranschlußschaltungseinheiten abzufragenden Teilnehmerleitungsindikationen abgibt,
**dadurch gekennzeichnet,**
- daß sie als Parallelschnittstelle (S) realisiert ist,
- daß hierzu als Bestandteil der Verarbeitungseinheit (ALAP) eine Anzahl von Anschlüssen (L0 bis L7) vorgesehen ist, denen jeweils eine Stufe eines Ein-/ Ausgaberegisters (CIL), in denen ein- bzw. auszugebende Informationen jeweils bis zum Auftreten eines Schreib- bzw. Lesebefehls zwischengespeichert werden, sowie jeweils eine Stufe eines Einstellregisters (LCR) zugeordnet ist,
- daß diese Anschlüsse jeweils wahlweise als Signaleingang oder als Signalausgang wirksamgeschaltet sind, je nachdem in welchen von zwei möglichen Schaltzuständen die betreffende Stufe des Einstellregisters (LCR) gebracht ist,
- daß diese Anschlüsse (L0 bis L7) ferner in einer ersten Betriebsart, in der Teilnehmeranschlußschaltungseinheiten (IR/SLIC 0, IR/SLIC 1) angeschlossen sind, bei denen ebenfalls einem Teil der Anschlüsse (D1 bis D3, SLIC 0; D1 bis D3, SLIC 1) jeweils die Stufe eines Ein-/ Ausgaberegisters (CIL) zugeordnet ist, und
- in einer zweiten Betriebsart betreibbar sind, in der Teilnehmeranschlußeinheiten (ER/SLIC 0, ER/SLIC 1) angeschlossen sind, bei denen ein solches Ein-/ Ausgaberegister (CIL) fehlt,
- wobei bei Vorliegen der ersten Betriebsart bei der Verarbeitungseinheit (ALAP) n Anschlüsse (L0, L1), die jeweils mit dem Anschluß (SE/D-0, SE/D-1) einer anderen von n Teilnehmeranschlußschaltungseinheiten (IR/SLIC 0, IR/SLIC 1) verbunden sind, wahlweise als Ausgang wirksamgeschaltet sind, in welchem Falle sie ein die betreffende Teilnehmeranschlußschaltungseinheit (IR/SLIC 0, IR/SLIC 1) in Betriebsbereitschaft versetzendes Signal abgeben oder als Eingang wirksamgeschaltet sind, in welchem Falle sie von der betreffenden Teilnehmeranschlußschaltungseinheit abgegebene Daten aufnehmen, die übrigen mit Teilnehmeranschlußschaltungseinheiten verbundenen Anschlüsse (L2 bis L7) dagegen nur als Ausgänge wirksamgeschaltet sind, von denen mindestens eine Gruppe (L2 bis L5) zur Abgabe von Einstellbefehlen an die Teilnehmeranschlußschaltungseinheiten dient, sowie bei den Teilnehmeranschlußschaltungseinheiten jeweils ein Anschluß (SE/D-0, SE/D-1) als Eingang wirksamgeschaltet ist, der das von der Verarbeitungseinheit (ALAP) gelieferte Betriebsbereitschaftssignal aufnimmt, oder als Ausgang wirksamgeschaltet ist, über den entsprechend den an die übrigen nur als Eingänge wirksamgeschalteten Anschlüssen (D0 bis D3) von der Verarbeitungseinheit (ALAP) abgegebenen Einstellbefehlen, die den Ergebnissen von in der Teilnehmeranschlußschaltungseinheit vorgenommenen Teilnehmeranschlußleitungsindikationen entsprechende Signal abgegeben werden, und
- wobei bei Vorliegen der zweiten Betriebsart bei der Verarbeitungseinheit (ALAP) sämtliche Anschlüsse (L0 bis L7) in n Gruppen als Ausgänge wirksamgeschaltet sind, über die Einstellbefehle für n angeschlossene Teilnehmeranschlußschaltungseinheiten (ER/SLIC 0, ER/SLIC 1) abgegeben werden, sowie bei jen angeschlossenen Teilnehmeranschlußleitungseinheiten eine entsprechende Anzahl von mit diesen Ausgängen verbundenen Anschlüssen (D0-0 bis D3-0, D0-1 bis D3-1) sowie ein weiterer Anschluß (SEL) zur Aufnahme eines in dieser Betriebsart nicht von der Verarbeitungseinheit (ALAP) gelieferten Betriebsbereitschaftssignals nur als Eingänge und ein Anschluß (DET-0, DET-1) nur als Ausgang zur nicht an die Verarbeitungseinheit (ALAP) gerichteten Abgabe von den Ergebnissen der genannten Teilnehmeranschlußleitungsindikationen entsprechenden Signalen wirksamgeschaltet ist.

## Claims

1. A digital interface between at least two subscriber line interface circuits (JR-SLIC; ER-SLIC) for connecting analog subscriber lines of a digital time-division multiplex telecommunication network and a processing unit (ALAP) effecting the coding and decoding and filtering of the telephone information items transmitted via the subscriber lines under the controlling influence of its own processor, which processing unit also outputs the instructions for setting up various operating states of the subscriber line interface circuits and for establishing the type of subscriber line status indications to be interrogated in the subscriber line interface circuits, characterised in that it is
- implemented as a parallel interface (S),
- in that for this purpose a number of connections (L0 to L7) is provided as component of the processing unit (ALAP), which connections are in each case associated with one stage of an input/output register (CIL), in which information items to be input and output are in each case temporarily stored until a write or read command occurs, and in each case one stage of a control register (LCR),
- in that these connections are in each case optionally activated as signal input or as signal ouput depending on which of two possible switching states the relevant stage of the control register (LCR) is placed in,
- in that these connections (L0 to L7) can also be operated in a first operating mode in which subscriber line interface circuits (IR/SLIC 0, IR/SLIC 1) are connected in which in each case the stage of an input/output register (CIL) is also allocated to some of the connections (D1 to D3, SLIC 0 to D3, SLIC 1), and
- in a second operating mode in which subscriber line interface circuits (ER/SLIC 0, ER/SLIC 1) are connected in which such an input/output register (CIL) is lacking,
- in which arrangement, when the first operating mode is present, n connections (L0, L1), which are in each case connected to the connection (SE/D-0, SE/D-1) of another one of n subscriber line interface circuits (IR/SLIC 0, IR/SLIC 1), are optionally activated as output, in which case they output a signal placing the relevant subscriber line interface circuit (IR/SLIC 0, IR/SLIC 1) into operational readiness or are activated as input, in which case they accept data output by the relevant subscriber line interface circuit, but the remaining connections (L2 to L7) connected to subscriber line interface circuits are only activated as outputs, of which at least one group (L2 to L5) is used for outputting setting commands to the subscriber line interface circuits, and in each case one connection (SE/D-0, SE/D-1) in the subscriber line interface circuits is activated as input which accepts the operational readiness signal supplied by the processing unit (ALAP), or is activated as output via which, in accordance with the setting commands output by the processing unit (ALAP) to the remaining connections (D0 to D3) only activated as inputs, the signals corresponding to the results of subscriber line status indications obtained in the subscriber line interface circuit are output, and
- when the second operating mode occurs, all connections (L0 to L7) are activated in the processing unit (ALAP) in n groups as outputs via which setting commands for n connected subscriber line interface circuits (ER/SLIC 0, ER/SLIC 1) are output, and a corresponding number of connections (D0-0 to D3-0, D0-1 to D3-1) connected to these outputs and a further connection (SEL) for receiving an operational readiness signal not supplied by the processing unit (ALAP) in this operating mode are only activated as inputs and a connection (DET-0, DET-1) is only activated as output for the delivery, which is not directed to the processing unit (ALAP), of signals corresponding to the results of said subscriber line status indications.

## Revendications

1. Interface numérique entre au moins deux unités (JR-SLIC; ER-SLIC) de circuits de raccordement d'abonnés pour le raccordement de lignes analogiques d'abonnés d'un réseau numérique de télécommunication à multiplexage temporel et une unité de traitement (ALAP), qui exécute le codage ou le décodage et le filtrage des informations téléphoniques, transmises par l'intermédiaire des lignes d'abonnés, sous la commande d'un processeur particulier et qui envoie également les instruction de réglage servant à régler différents états de fonctionnement des unités formant circuits de raccordement d'abonnés et à déterminer le type des indications de lignes d'abonnés, qui doivent être interrogées dans les unités formant circuits de raccordement d'abonnés,
caractérisée par le fait
- que cette interface est réalisée sous la forme d'une interface parallèle (S),
- qu'à cet effet, il est prévu, en tant que partie de l'unité de traitement (ALAP), un nombre de bornes (L0 à L7), auxquelles sont associés respectivement des étages d'un registre d'entrée/sortie (CIL), dans lesquels des informations devant être introduites ou délivrées sont mémorisées temporairement respectivement jusqu'à l'apparition d'une instruction d'enregistrement ou de lecture, ainsi que des étages respectifs d'un registre de réglage (LCR),
- que ces bornes sont activées respectivement au choix en tant qu'entrées de signe ou sorties de signe en fonction de celui de deux états de commutation possible, dans lequel l'étage considéré du registre de réglage (LCR) est placé,
- que ces bornes (L0 à L7) peuvent en outre fonctionner dans un premier type de fonctionnement, dans les unités formant circuits de raccordement d'abonnés (IR/SLIC 0, IR/SLIC 1), dans lesquelles respectivement l'étage d'un registre d'entrée/sortie (CIL) est associée également une partie des bornes (D1 à D3, SLIC 0, D1 à D3, SLIC 1), et
- dans un second type de fonctionnement, dans lequel sont raccordées des unités de raccordement d'abonnés (ER SLIC 0, ER SLIC 1), dans lesquelles un tel registre d'entrée/sortie (CI) est absent,
et dans laquelle
- dans le cas de l'existence du premier type de fonctionnement, dans l'unité de traitement (ALAP), n bornes (L0, L1), qui sont raccordées respectivement à la borne (SE/D-0, SE/D-1) d'une autre parmi n unités formant circuits de raccordement d'abonnés (IR/SLIC 0, IR/SLIC 1), sont activées au choix en tant que sortie, auquel cas elles délivrent un signal, placant à l'état prêt à fonctionner l'unité considérée formant circuit de raccordement d'abonnés (IR/SLIC 0, IR/SLIC 1) ou sont activées en tant qu'entrée, auquel cas elles reçoivent des données délivrées par l'unité considérée formant circuit de raccordement d'abonnés, tandis que les autres bornes (L2 à L7), qui sont reliées aux unités formant circuits de raccordement d'abonnés, sont activées uniquement en tant que sorties, parmi lesquelles au moins un groupe (L2 à L5) sert à délivrer des instructions de réglage aux unités formant circuits de raccordement d'abonnés, et, dans les unités formant circuits de raccordement d'abonnés, en tant qu'entrée est branchée respectivement une borne (SE/D-0, SE/D-1), qui reçoit le signal d'état prêt au fonctionnement qui est délivré par l'unité de traitement (ALAP), ou est activée en tant que sortie, par l'intermédiaire de laquelle les signaux, qui correspondent aux résultats d'indications de lignes d'abonnés établies dans l'unité formant circuit de raccordement d'abonnés, sont délivrés conformément aux instructions de réglage délivrées aux autres bornes (D0 à D3), activées uniquement en tant qu'entrées, par l'unité de traitement (ALAP), et dans laquelle
- dans le cas de la présence du second type de fonctionnement, dans l'unité de traitement (ALAP), toutes les bornes (L0 à L7) dans n groupes sont activées en tant que sorties, par l'intermédiaire desquelles les instructions de réglage sont délivrées pour n unités formant circuits de raccordement d'abonnés raccordées (ER/SLIC 0, ER/SLIC 1), et dans les unités formant circuits de raccordement d'abonnés raccordées, un nombre correspondant de bornes (D0-0 à D3-0, D0-1 à D3-1), reliées à ces sorties, ainsi qu'une autre borne (SEL) sont raccordées uniquement en tant qu'entrées pour la réception d'un signal d'état prêt au fonctionnement non délivré, dans ce type de fonctionnement, par l'unité de traitement (ALAP), et une borne (DET-0, DET-1) est activée uniquement en tant que sortie pour la délivrance, non dirigée vers l'unité de traitement (ALAP), de signaux correspondant à des résultats desdites indications de lignes d'abonnés.
